# EUROPEAN PATENT SPECIFICATION

(11) **EP 2 332 092 B1**
(45) Date of publication and mention of the grant of the patent: **29.06.2016**
(21) Application number: 09815367.9
(22) Date of filing: 22.09.2009
(51) Int. Cl.: G06Q 20/00, H04B 1/40, G06Q 20/02

(54) **APPARATUS AND METHOD FOR PREVENTING UNAUTHORIZED ACCESS TO PAYMENT APPLICATION INSTALLED IN CONTACTLESS PAYMENT DEVICE**
VORRICHTUNG UND VERFAHREN ZUR VERHINDERUNG UNERLAUBTEN ZUGRIFFS AUF EINE IN EINER BERÜHRUNGSFREIEN ZAHLUNGSVORRICHTUNG INSTALLIERTE ZAHLUNGSANWENDUNG
APPAREIL ET PROCÉDÉ POUR EMPÊCHER UN ACCÈS NON AUTORISÉ À UNE APPLICATION DE PAIEMENT INSTALLÉE DANS UN DISPOSITIF DE PAIEMENT SANS CONTACT

(30) Priority: 22.09.2008 US 99060 P
(43) Date of publication of application: 15.06.2011
(73) Proprietor: Visa International Service Association, San Francisco, CA 94128-8999 (US)
(72) Inventor: AABYE, Christian, Foster City, California 94404 (US); NGO, Hao, San Jose, California 95131 (US); WILSON, David, London Surrey W2655 (GB)
(74) Representative: Hoarton, Lloyd Douglas Charles
(86) International application number: PCT/US2009/057791
(87) International publication number: WO 2010/033967

(56) References cited:
- EP-A2- 1 280 115
- WO-A1-2010/033970
- WO-A2-2007/145540
- WO-A2-2007/145540
- US-A1- 2003 154 139
- US-A1- 2005 187 873
- US-A1- 2008 116 264

## Description

### BACKGROUND

Embodiments of the present invention are directed to systems, apparatuses and methods for performing payment transactions, and more specifically, to a system and associated apparatus and method for performing payment transactions using a portable payment device that includes a payment application, where the payment application is activated in response to data being provided by a trusted source, as claimed. Embodiments of the invention may be used to conduct payment transactions in a secure manner by preventing unauthorized access to transaction data or the functionality of the payment application in the absence of specific data being provided by the trusted source.

Consumer payment devices are used by millions of people worldwide to facilitate various types of commercial transactions. In a typical transaction involving the purchase of a product or service at a merchant location, the payment device is presented at a point of sale terminal ("POS terminal") located at a merchant's place of business. The POS terminal may be a card reader or similar device that is capable of accessing data stored on the payment device, where this data may include identification or authentication data, for example. Data read from the payment device is provided to the merchant's transaction processing system and then to the Acquirer, which is typically a bank or other institution that manages the merchant's account. The data provided to the Acquirer may then be provided to a payment processing network that is in communication with data processors that process the transaction data to determine if the transaction should be authorized by the network, and assist in the clearance and account settlement functions for completed transactions. The authorization decision and clearance and settlement portions of the transaction may also involve communication and/or data transfer between the payment processing network and the bank or institution that issued the payment device to the consumer (known as the Issuer).

Although a consumer payment device may be a credit card or debit card, it may also take the form of a "smart" card or "smart" chip. A smart card is generally defined as a pocket-sized card (or other form of portable payment device) that is embedded with a microprocessor and one or more memory chips, or is embedded with one or more memory chips with non-programmable logic. The microprocessor type card typically can implement certain data processing functions, such as to add, delete, or otherwise manipulate information stored in a memory location on the card. In contrast, the memory chip type card (for example, a prepaid phone card) typically can only act as a file to hold data that is manipulated by a card reading device to perform a pre-defined operation, such as debiting a charge from a pre-established balance stored in a record in the memory. Smart cards, unlike magnetic stripe cards (such as standard credit cards), can implement a variety of functions and can contain a variety of types of information on the card. Therefore, in some applications they may not require access to a remote database for the purpose of authenticating a consumer or creating a data record at the time of a transaction. A smart chip is a semiconductor device that is capable of performing most, if not all, of the functions of a smart card, but may be embedded in another device.

Smart cards or smart chips come in two general varieties; the contact type and the contactless type. A contact type smart card or smart chip is one that includes a physical element (e.g., a magnetic stripe, contact pad, etc.) that enables access to the data and functional capabilities of the card, typically via some form of terminal or card reader. In contrast, a contactless smart card or smart chip is a device that incorporates a means of communicating with a card reader or point of sale terminal without the need for direct physical contact. Thus, such devices may effectively be "swiped" (i.e., enabled to be read by, or otherwise exchange data with another device) by passing them close to a properly configured card reader or terminal. Contactless cards or chips typically communicate with a device reader or terminal using RF (radio-frequency) technology, wherein proximity to the reader or terminal enables data transfer between the card or chip and the reader or terminal. Contactless devices have found uses in banking and other applications, where they have the advantage of not requiring removal from a user's wallet or pocket in order to participate in a transaction. A contactless card or chip may be embedded in, or otherwise incorporated into, a mobile device such as a mobile phone or personal digital assistant (PDA). Further, because of the growing interest in such devices, standards have been developed that govern the operation and interfaces for contactless smart cards, such as the ISO 14443 standard.

In a typical payment transaction, data is sent from a point of sale terminal to the Issuer to authenticate a consumer and obtain authorization for the transaction. As part of the authentication or authorization processes, the data may be accessed or processed by other elements of the transaction processing system (e.g., the merchant's Acquirer or a payment processor that is part of a payment processing network). Note that in some cases, authorization for the transaction may be obtained without connecting to the Issuer; this may be permitted by Issuer configured risk management parameters that have been set on the consumer's payment application or payment device. If the proposed transaction is authorized, then the consumer may provide other information to the merchant as part of completing the transaction. The Issuer or data processor may also send data back to the consumer. Such data may include an update to records of the transactions for which the payment device has been used, or to a current balance of an account associated with the device.

A payment device may include a payment application which is activated in order to enable a consumer to initiate or otherwise conduct a payment transaction. In some cases the payment device may be a mobile phone or similar device that is capable of communicating over a wireless network and that includes a contactless element that is used for conducting the payment transaction. Typically, the contactless element uses a near field communications (NFC) capability to communicate with a device reader or point of sale terminal in order to conduct a transaction. A potential security problem that may arise with such payment devices is that an unauthorized person may try to obtain access to the payment application or to transaction data by using the wireless network communications ability of the payment device to activate the payment application or to attempt to access data stored in a secure memory of the payment device.

Another potential security problem that can occur when using a payment device that includes a wireless communications capability is that of a denial of service attack on the payment device. A malicious entity could effectively block a valid user from accessing the payment application installed on the user's payment device by using a wireless network to transmit data to the payment application that the application interpreted as an incorrect attempt to enter the user's passcode or security data. A relatively small number of such incorrect passcode entry attempts could lead to the application blocking access to the payment functions and transaction data, which would be an inconvenience to the user. If enough such malicious attempts to access multiple users' payment applications were attempted, it is possible that a small number of them might be successful, thereby providing unauthorized access to some users' payment applications.

What is desired is a system, apparatus and method for preventing unauthorized access to a payment application installed on a mobile payment device or to transaction data stored in the device, particularly for the case of a payment device that is capable of communications using a wireless network. Embodiments of the invention address these problems and other problems individually and collectively.

### BRIEF SUMMARY

Embodiments of the present invention are directed to a system, apparatus, and method for preventing the unauthorized access to a payment application installed on a mobile payment device as claimed. In some embodiments, the mobile payment device is a mobile phone that includes a contactless element (such as a contactless smart chip) and that is capable of communication and data transfer using a wireless communications network and a near field or short range communications capability. The invention prevents unauthorized access or an effective denial of service attack by requiring that access control data be received from a trusted source, such as a controller or application in charge of managing inputs from a phone keypad, in order to activate the payment application or to access stored data. In a typical embodiment, the access control data may be a security code or alphanumeric data string that is provided by the controller in response to a passcode entered by a user using the phone keypad. In response to entry of the passcode data by the user, the invention communicates the security or other access control data to the payment application (or to an element responsible for performing the access control function for the payment application). The security code and passcode are verified by the payment application, and if both are valid, then the payment application and/or secure transaction data is made available to the user. The inventive system, apparatus and method may be implemented using a contactless smart chip and a wireless data transfer element (e.g., a near field communications (NFC) capability or similar short range communications technology, etc.) embedded within a mobile wireless device. Typical embodiments of the mobile device include a mobile phone and a PDA.

Other objects and advantages of the present invention will be apparent to one of ordinary skill in the art upon review of the detailed description of the present invention and the included figures.

### BRIEF DESCRIPTION OF THE DRAWINGS

Fig. 1 is a block diagram illustrating a transaction processing system that may be used with some embodiments of the present invention;
Fig. 2 is a functional block diagram illustrating the primary components of a system that may be used to prevent unauthorized use of a payment application that is contained in a mobile device, in accordance with some embodiments of the present invention;
Fig. 3 is a functional block diagram illustrating the primary components of a mobile device, such as a mobile phone that may be used as part of the inventive system and method;
Fig. 4 is a functional block diagram illustrating certain of the functional elements that may be present in an apparatus that may be used to implement the inventive method for preventing unauthorized access to a payment application installed in a mobile payment device; and
Fig. 5 is a flow chart illustrating an embodiment of the inventive method or process for preventing unauthorized use of a payment application contained in a mobile payment device.

### DETAILED DESCRIPTION

Embodiments of the present invention are directed to a system, apparatus, and method for preventing the unauthorized use of a payment application installed in a mobile payment device as claimed. In some embodiments, the mobile payment device may be a mobile phone or personal digital assistant that includes a contactless element. The contactless element may include a payment application and secure data storage area, although one or both of those elements may be contained in other portions of the mobile payment device.

In some embodiments, the invention operates by requiring that secret security data be presented to the payment application for verification before a user is permitted use of the payment application or access to transaction records. In some embodiments, the secret security data is provided to the payment application by a controller, interface, or application that manages the operation of a trusted source contained in the payment device. Typically, the trusted source is a device or element that receives an input from the user, and in response, the trusted source or a controller for the trusted source provides that input and the secret security data to the payment application for verification. Examples of a suitable trusted source include a keypad, fingerprint or other biometric data reader, microphone, etc. A remote server storing access control data may also function in whole or in part as a trusted source.

In a typical scenario, a user provides suitable identification data to the trusted source, which then provides the identification data and secret security data to the payment application. The payment application verifies the validity of the secret security data and the user entered identification data, and in response, permits the user to access the functions of the payment application. By requiring that the user entered identification data (such as a passcode, fingerprint, voiceprint, etc.) and the secret security data be provided to the payment application by a verifiable trusted source, the present invention effectively eliminates the ability of a malicious entity to access the payment application or secure transaction records by sending false or unverifiable data over a wireless communications network to the payment device. In the case of a remote server functioning as a trusted source, the server may receive user entered data over a suitable communications network, and in response provide the secret security data to the payment device for verification by the payment application. Further, in some examples, the remote server may provide both the secret data and the user entered data back to the payment device as part of a single data package or message, with the payment application then using that single data package or message to perform both parts of the data verification operation needed to enable access to the payment application.

The present invention is typically implemented in the context of a payment transaction; therefore prior to describing one or more embodiments of the invention in greater detail, a brief discussion will be presented of the entities involved in processing and authorizing a payment transaction and their roles in the authorization process.

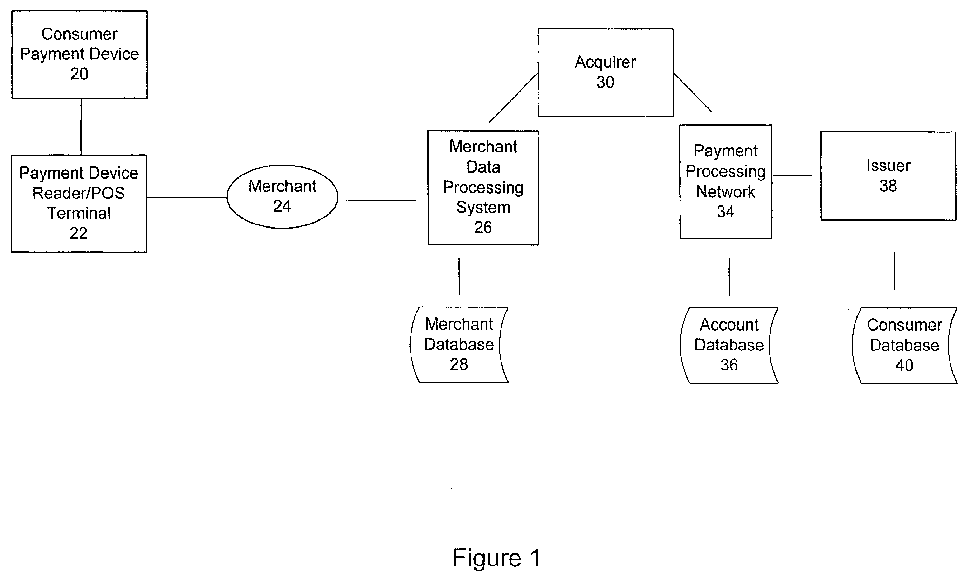

Figure 1 is a block diagram illustrating a transaction processing system that may be used with some embodiments of the present invention. Typically, an electronic payment transaction is authorized if the consumer conducting the transaction is properly authenticated (i.e., their identity and their valid use of a payment account is verified) and if the consumer has sufficient funds or credit to conduct the transaction. Conversely, if there are insufficient funds or credit in the consumer's account, or if the consumer's payment device is on a negative list (e.g., it is indicated as possibly having been stolen or used in a fraudulent manner), then an electronic payment transaction may not be authorized. In the following description, an "Acquirer" is typically a business entity (e.g., a commercial bank) that has a business relationship with a particular merchant. An "Issuer" is typically a business entity (e.g., a bank) which issues a payment device (such as a credit or debit card) to a consumer. Some entities may perform both Issuer and Acquirer functions.

Figure 1 illustrates the primary functional elements that are typically involved in processing a payment transaction and in the authorization process for such a transaction. As shown in Figure 1, in a typical payment transaction, a consumer wishing to purchase a good or service from a merchant uses a portable consumer payment device 20 to provide payment transaction data that may be used as part of a consumer verification or transaction authorization process. Portable consumer payment device 20 may be a debit card, credit card, smart card, mobile device containing a contactless chip, or other suitable form of device.

The portable consumer payment device is presented to a device reader or point of sale (POS) terminal 22 which is able to access data stored on or within the payment device. The account data (as well as any required consumer data) is communicated to the merchant 24 and ultimately to the merchant's transaction/data processing system 26. As part of the authorization process performed by the merchant, merchant transaction processing system 26 may access merchant database 28, which typically stores data regarding the customer/consumer (as the result of a registration process with the merchant, for example), the consumer's payment device, and the consumer's transaction history with the merchant. Merchant transaction processing system 26 typically communicates with Acquirer 30 (which manages the merchant's accounts) as part of the overall authentication or authorization process. Merchant transaction processing system 26 and/or Acquirer 30 provide data to Payment Processing Network 34, which among other functions, participates in the clearance and settlement processes that are part of the overall transaction processing. Communication and data transfer between Merchant transaction processing system 26 and Payment Processing Network 34 is typically by means of an intermediary, such as Acquirer 30. As part of the consumer verification or transaction authorization process, Payment Processing Network 34 may access account database 36, which typically contains information regarding the consumer's account payment history, chargeback or transaction dispute history, credit worthiness, etc. Payment Processing Network 34 communicates with Issuer 38 as part of the authentication or authorization process, where Issuer 38 is the entity that issued the payment device to the consumer and manages the consumer's account. Customer or consumer account data is typically stored in customer/consumer database 40 which may be accessed by Issuer 38 as part of the authentication, authorization or account management processes. Note that instead of, or in addition to being stored in account database 36, consumer account data may be included in, or otherwise part of customer/consumer database 40.

In standard operation, an authorization request message is created during a consumer purchase of a good or service at a point of sale (POS) using a portable consumer payment device. In some embodiments, the portable consumer payment device may be a wireless phone or personal digital assistant that incorporates a contactless card or chip. The contactless card or chip may communicate with the point of sale terminal using a near field communications (NFC) capability. The authorization request message is typically sent from the device reader/POS terminal 22 through the merchant's data processing system 26 to the merchant's Acquirer 30, to a payment processing network 34, and then to an Issuer 38. An "authorization request message" can include a request for authorization to conduct an electronic payment transaction and data relevant to determining if the request should be granted. For example, the message may include one or more of an account holder's payment account number, currency code, sale amount, merchant transaction stamp, acceptor city, acceptor state/country, etc. An authorization request message may be protected using a secure encryption method (e.g., 128-bit SSL or equivalent) in order to prevent unauthorized access to account or transaction data.

After the Issuer receives the authorization request message, the Issuer determines if the transaction should be authorized and sends an authorization response message back to the payment processing network to indicate whether or not the current transaction is authorized. The payment processing system then forwards the authorization response message to the Acquirer. The Acquirer then sends the response message to the Merchant. The Merchant is thus made aware of whether the Issuer has authorized the transaction, and hence whether the transaction can be completed.

At a later time, a clearance and settlement process may be conducted by elements of the payment/transaction processing system depicted in Figure 1. A clearance process involves exchanging financial details between an Acquirer and an Issuer to facilitate posting a transaction to a consumer's account and reconciling the consumer's settlement position. Clearance and settlement can occur simultaneously or as separate processes.

Payment Processing Network 34 may include data processing subsystems, networks, and other means of implementing operations used to support and deliver authorization services, exception file services, and clearing and settlement services for payment transactions. An exemplary Payment Processing Network may include VisaNet. Payment Processing Networks such as VisaNet are able to process credit card transactions, debit card transactions, and other types of commercial transactions. VisaNet, in particular, includes a VIP system (Visa Integrated Payments system) which processes transaction authorization requests and a Base II system which performs transaction clearing and settlement services.

Payment Processing Network 34 may include a server computer. A server computer is typically a powerful computer or cluster of computers. For example, the server computer can be a large mainframe, a minicomputer cluster, or a group of servers functioning as a unit. In one example, the server computer may be a database server coupled to a web server. Payment Processing Network 34 may use any suitable combination of wired or wireless networks, including the Internet, to permit communication and data transfer between network elements. Among other functions, Payment Processing Network 34 may be responsible for ensuring that a consumer is authorized to conduct a transaction (via an authentication process), confirm the identity of a party to a transaction (e.g., via receipt of a personal identification number), confirm a sufficient balance or credit line to permit a purchase, or reconcile the amount of a purchase with the consumer's account (via entering a record of the transaction amount, date, etc.).

Consumer payment device 20 may take one of many suitable forms. As mentioned, the portable consumer device can be a mobile device that incorporates a contactless element such as a chip for storing payment data (e.g., a BIN number, account number, etc.) and includes a near field communications (NFC) data transfer element such as an antenna, a light emitting diode, a laser, etc. The portable consumer device may also include a keychain device (such as the Speedpass™ commercially available from Exxon-Mobil Corp.), etc. The device containing the contactless card or chip, or other data storage element may be a cellular (mobile) phone, personal digital assistant (PDA), pager, transponder, or the like. The portable consumer device may also incorporate the ability to perform debit functions (e.g., a debit card), credit functions (e.g., a credit card), or stored value functions (e.g., a stored value or prepaid card).

In embodiments of the invention that include a contactless element (e.g., a contactless chip and near field communications data transfer element) embedded within a wireless mobile phone or similar device, the contactless element can communicate with a Merchant's device reader or point of sale terminal using a short range communication method, such as a near field communications (NFC) capability. Examples of such NFC technologies or similar short range communications technologies include ISO standard 14443, RFID, Bluetooth™ and Infra-red communications methods.

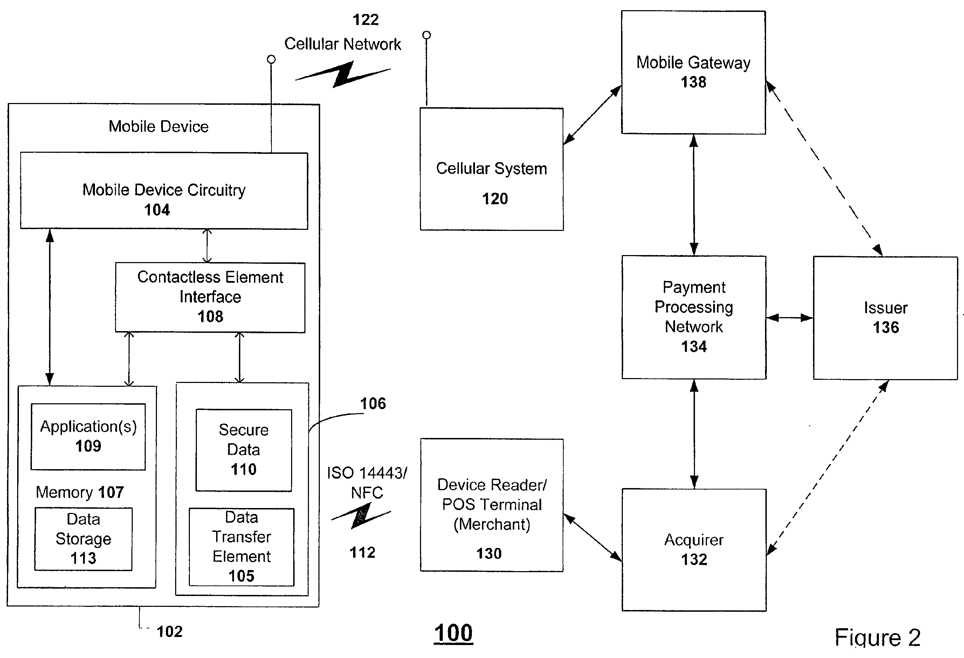

Figure 2 is a functional block diagram illustrating the primary components of a system 100 that may be used to prevent unauthorized use of a payment application that is contained in a mobile device, in accordance with some embodiments of the present invention. As shown in Figure 2, system 100 includes a mobile device 102 having wireless communications capabilities 122. Mobile device 102 may be a wireless mobile telephone, PDA, laptop computer, pager, etc. In a typical embodiment, mobile device 102 is a cell phone, although as noted, implementation of the present invention is not limited to this embodiment as the mobile device that functions as a payment device may take any suitable form convenient for use by a consumer. Naturally, if the mobile device is not a cell phone or similar form of wireless communications device, then the mobile device may not be capable of communication using a wireless or cellular network. In the case of a cell phone as the mobile device 102, the device includes mobile device (cell phone) circuitry 104 that enables certain of the telephony functions. Among other functions, mobile device circuitry 104 enables mobile device 102 to communicate wirelessly with cellular system (i.e., a wireless carrier) 120 via cellular network 122.

Mobile device 102 further includes a contactless element 106, typically implemented in the form of a semiconductor chip. Contactless element 106 may include a secure data storage element 110, although secure data storage element 110 may also be implemented as a separate element from contactless element 106. Contactless element 106 includes a near field communications (NFC) data transfer (e.g., data transmission) element 105, such as an antenna or transducer. The near field communications capability permits a device reader or point of sale terminal to exchange data with (or perform operations on) contactless element 106 as part of, or in preparation for, a payment transaction. In some embodiments, contactless element 106 may be embedded within and integrated with the elements of mobile device 102. In such a case, data or control instructions may optionally be transmitted via cellular network 122 and be exchanged with, or applied to, contactless element 106 by means of contactless element interface 108. In that situation, contactless element interface 108 functions to permit the exchange of data and/or control instructions between mobile device circuitry 104 (and hence the cellular network) and contactless element 106. Thus, contactless element 106 may include data storage capability in the form of a memory or secure data storage 110 that may be accessed via a near field communications capability or interface 108 to permit the implementation of data read, write, and erase functions, for example.

Secure data storage 110 may be used by mobile device 102 to store operating parameters or other data utilized in the operation of the device. Secure data storage 110 may also be used to store other data for which enhanced security is desired, for example, transaction data, personal account data, identification data, authentication data, access control data for an application or device function, etc. As mentioned, secure data storage 110 may be implemented in the form of a chip that is separate and apart from contactless element 106, or alternatively, may be a section of memory in a chip that forms part of contactless element 106. Note also that the secure data storage and/or contactless element contained within the mobile device may be a removable element or may be integrated within the mobile device. Examples of removable elements include SIM cards, flash memory cards, and other suitable devices.

Mobile device 102 may also include one or more applications 109, where applications 109 are implemented in the form of one or more of software, firmware, or hardware. Applications 109 are used to implement various functions desired by a consumer, where such functions may include, but are not limited to, eCommerce transaction operations, payment transaction operations, etc. Typically, applications 109 represent processes or operations that are dedicated to a specific function that provides added value for the consumer and which are not part of the standard operation of the device (i.e., not part of enabling the standard telephony functions, for example). As shown in the figure, applications 109 may exchange data with secure data storage 110 (via contactless element interface 108) and may also be capable of exchanging data with mobile device circuitry 104. A typical application 109 for the purposes of the present invention is a payment application that enables a consumer to make a payment for a transaction, where the transaction is wholly or partially conducted using the mobile device. In such an example, secure data storage 110 may contain authentication data, consumer identification data, transaction record data, account balance data, etc. Applications 109 are typically stored as a set of executable instructions in memory 107, which may also include data storage 113. A processor accesses memory 107 to load and unload the instructions and data as needed to execute the instructions to perform the functions of the applications. Note that for purposes of the present invention, a payment application may be contained in a data storage region of the mobile device that is part of, or separate from, the data storage region contained in the contactless element.

Contactless element 106 is capable of transferring and receiving data using data transfer element 105 which implements a near field communications capability 112, typically in accordance with a standardized protocol or data transfer mechanism (identified as ISO 14443/NFC in the figure). Near field communications capability 112 is a short-range communications capability; examples include ISO 14443, RFID, Bluetooth™, infra-red, or other data transfer capability that can be used to exchange data between the mobile device 102 and a device reader or point of sale terminal 130, which is typically located at a Merchant's place of business. Thus, in some embodiments, mobile device 102 is capable of communicating and transferring data and/or control instructions via both cellular network 122 and near field communications capability 112, although communications and data transfer by means of the cellular network is not required in order to implement some embodiments of the present invention. In the situation in which the mobile payment device is capable of communications and data transfer by means of the cellular network, embodiments of the present invention may provide additional security to prevent unauthorized access to the payment application and transaction data by a malicious entity using the wireless network to provide data to the mobile device.

System 100 further includes Acquirer 132 which is in communication with Merchant or with Merchant's device reader or point of sale terminal 130. Acquirer 132 is in communication with Payment Processing Network 134 and as was described, may exchange data with Payment Processing Network 134 as part of the transaction authorization process. Payment Processing Network 134 is also in communication with Issuer 136. As was described, Issuer 136 may exchange data with Payment Processing Network 134 as part of an authentication, transaction authorization, or transaction reconciliation process.

System 100 may also include Mobile Gateway 138, which is capable of coupling the cellular (wireless) network or system to a second network (typically a wireline network such as the Internet) and enabling the transfer of data between the networks. Mobile Gateway 138 may perform data processing operations as needed to permit the efficient transfer of data between the two types of networks, including, but not limited to, data reformatting or other processing to take into account differences in network protocols. Mobile Gateway 138 may also perform data processing operations to enable more efficient data transfer between the networks and devices coupled to each type of network, such as for purposes of improving the ability of a consumer to utilize the received data on a mobile device. As shown in the figure, in some embodiments, Mobile Gateway 138 is coupled to Payment Processing Network 134, which is coupled to Acquirer 130. Note that other embodiments are possible, such as where Mobile Gateway 138 is coupled to Issuer 136, as well as where Acquirer 130 is coupled to Issuer 136 (as suggested by the broken lines in Figure 2). Similarly, Issuer 136 may include the capability of functioning as Mobile Gateway 138.

The mobile payment device may be any device that includes a payment application, where the payment application is used to initiate or otherwise participate in a payment transaction. In some embodiments the mobile payment device may include a contactless element that is capable of communication and data transfer using a near field communication or similar short range communications method. Further, the mobile device may include a capability to communicate and transfer data using a wireless network, such as a cellular phone network. In such a situation, embodiments of the present invention can reduce or eliminate the risk that a malicious entity may provide data or commands over the wireless network in an attempt to obtain access to the payment application, its functions, or to transaction data stored in the payment device.

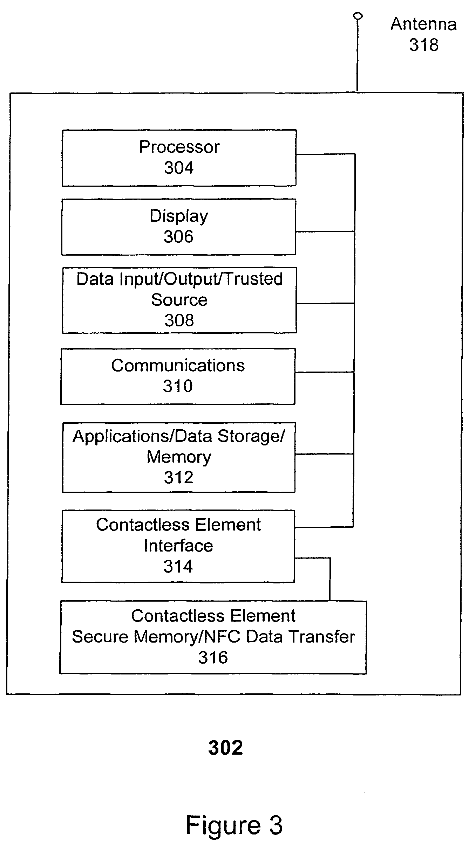

One example of a mobile payment device that may be used to implement embodiments of the present invention is a mobile wireless phone equipped with a NFC capability. Figure 3 is a functional block diagram illustrating the primary components of a portable consumer device (e.g., element 102 of Figure 2), such as a mobile phone that may be used as part of the inventive system and methods. As illustrated in Figure 3, mobile device 302 may include circuitry that is used to enable certain telephony and other device functions. The functional elements responsible for enabling those functions may include a processor 304 for executing instructions that implement the functions and operations of the device. Processor 304 may access data storage 312 (or another suitable memory region or element) to retrieve instructions or data used in executing the instructions.

Data input/output elements 308 may be used to enable a user to input data (via a microphone, keyboard, touchscreen, fingerprint detector, biometric data input device, for example) or receive output data (via a display screen 306 or speaker, for example). As will be described, in some embodiments of the present invention, one or more of the data input elements (or a controller for the data input element) may function as a "trusted source" that provides "secret data" to a payment application in response to entry of a passcode by a user. The secret data and passcode are then used by the payment application to authenticate the user and enable access to the functions of the payment application. Communications element 310 may be used to enable data transfer between device 302 and a wireless network (via antenna 318, for example) to assist in enabling telephony and data transfer functions. As described with reference to Figure 2, device 302 may also include contactless element interface 314 to enable data transfer between contactless element 316 and other elements of the device, where contactless element 316 may include a secure memory and a near field communications data transfer element. The contactless element may implement a near field communications capability that enables communication and data transfer between device 302 and a device reader or POS terminal that is part of a payment transaction processing system.

Data storage 312 may be a memory that stores data, and may be in any suitable form including a memory chip, disk drive, flash memory, etc. The memory may be used to store data such as user identification or authentication information, user account information, transaction data, etc. Stored financial information may include information such as bank account information, bank identification number (BIN), credit or debit card account number information, account balance information, expiration date, consumer information such as name, date of birth, etc. Note that such data may instead, or also be stored in a secure data storage element, such as secure data storage 110 of Figure 2 or a similar secure memory that is part of contactless element 316. As described, data storage 312 may also contain instructions which when executed by processor 304 implement operations or processes that are part of the operation of the device or of applications installed on the device.

Data storage 312 or a secure memory element that is part of contactless element 316 may include a payment application that is activated in order to initiate or otherwise facilitate a payment transaction. The payment application may access a data storage element to obtain data used to participate in a payment transaction or to record or update a data record for a transaction. The payment application may communicate and exchange data with other elements of device 302 as the result of an application programming interface (API) or other suitable form of interface, or as a result of interactions with a controller or application that functions to receive data inputs from a user and provides the received data to the payment application.

The payment application may perform one or more authentication or verification processes or operations prior to allowing a user to access the functions of the payment application or data associated with the payment application. In embodiments of the present invention, such authentication or verification processes or operations may include verifying that a trusted source has provided the payment application with the secret data, and that both the secret data and the user provided passcode (or other user provided identification or authentication data) are valid. If both the secret data and the user provided identification or authentication data are valid, then the functions of the payment application will be "unblocked", "activated", or otherwise made available to the user.

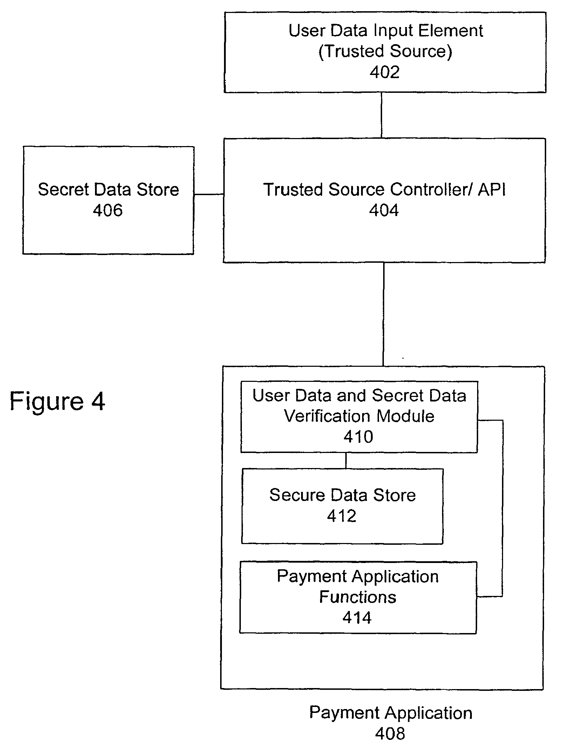

Figure 4 is a functional block diagram illustrating certain of the functional elements that may be present in an apparatus that may be used to implement the inventive method for preventing unauthorized access to a payment application installed in a mobile payment device. The functional elements depicted in Figure 4 may be implemented in the form of one or more of software, firmware, or hardware. If implemented in the form of software, the elements may be implemented in the form of instructions stored in a computer readable medium that are executable by a processor. The functional elements depicted in Figure 4 are typically part of a mobile payment device, such as a mobile phone, PDA, laptop computer, etc. Note that if the secret data is stored in a remote server and provided from that server to the mobile payment device, then certain of the elements depicted in Figure 4 may reside in the server, with the mobile device and server communicating using a suitable communications network (such as a wireless or cellular network).

As noted, in embodiments of the present invention, the inventive method involves controlling access to a payment application installed in a payment device. The payment application enables a user to make payments for goods or services and to access data contained in transaction records that may be stored in the device. The payment application may perform one or more security or access control operations prior to enabling a user to access the payment application or transaction data. Typically, the security or access control operations act as a form of user verification or validation, and involve determining that certain data presented to the payment application user interface is valid or verified as authentic. The data presented to the payment application user interface is typically provided by a user data input device. However, as noted, a malicious entity may attempt to gain unauthorized access to the payment application by providing data to the payment application user interface (by means of a wireless network interface, for example). Embodiments of the present invention prevent such an attempt from being successful, and also prevent unsuccessful attempts from resulting in a denial of service to a user.

In embodiments, the present invention operates to limit access to the payment application's security or access control operations (i.e., the user validation) by requiring that data be provided by a "trusted device". In embodiments of the present invention, a trusted device is a user data input device (or a controller or device coupled to the user data input device) that is typically part of the device containing the payment application. In some embodiments, the present invention prevents data being used as an input to the payment application user validation operations or functions unless that data was provided by an element of the payment device. Further, in order to prevent a person who is not entitled to use the payment device from gaining access by entering data via the user input device that provides data to the payment application, embodiments of the present invention utilize two types of security control data for the payment application. The first is the data input by a user, which may take the form of personal data that is suitable for the type of data input element involved. For example, the personal data may be a passcode, personal identification number, fingerprint, voiceprint, etc. that is associated with a specific authorized user. The second type of data is "secret data", which is data that is provided by the data input element (or a controller for the data input element, or in some examples, a remote server) in response to receiving the user's personal data. The secret data or code is not known to a user and may be generated as needed to provide security (e.g., on a regular basis, after a certain number of transactions, for each transaction, etc.). Both the personal data and the secret data must be verified as valid to enable a user to access the functions or operations of the payment application. This arrangement prevents a malicious entity from attempting to activate the payment application by providing data over the wireless network (since the payment application can only be activated by data provided by an element of the payment device or other trusted source), and also prevents someone who steals or finds a lost payment device from being able to activate the payment application (since the valid user's personal data must be used to cause a release of the secret data to the payment application).

As shown in Figure 4, the payment device may include a user data input element 402. User data input element 402 may take any suitable form, including, but not limited to, a keypad, a microphone, a fingerprint detector or sensor, a touchscreen, a biometric data sensor, etc. In some embodiments, user data input element 402 serves as the "trusted source" that receives input data from a user and in response provides that data and the "secret data" to the payment application. In other embodiments, user data input element 402 may serve as the input for user identification data, with a controller acting as the trusted source that controls release of the secret data. Transfer of data that is input by a user to data input element 402 to other elements of the payment device (such as the payment application) may be controlled or otherwise enabled by trusted source controller or API 404. Trusted source controller or API 404 make take any suitable form that is capable of receiving data from data input element 402 and performing data processing operations to transfer the input data, a form of the input data, or data generated in response to the input data to payment application 408. Further, trusted source controller or API 404 may execute or cause the execution of an application or instructions that perform some or all of the functions of controller or API 404. Such functions or operations may include processing the data input by a user to verify its authenticity or generating other data in response to the input data (such as a hash code, for example), where the generated data may be used to enable access to the secret data or to enable access to the functions of the payment application. Although such functions or operations may be performed by the trusted source controller or API, it is noted that such functions or operations are not required in order to implement all embodiments of the present invention.

In order to provide the secret data to the payment application in response to input of data by the user, trusted source controller or API 404 may access secret data store 406 to obtain the secret data that is stored therein. The secret data may be of any suitable form, including but not limited to, a data string, an alphanumeric character string, etc. In some embodiments, the secret data may be an eight byte data string. In some embodiments, the secret data may be generated for each attempted use of the payment application and erased after each use of the payment application. In other embodiments, the secret data may be the same for multiple uses of the payment application or for a predetermined time period. Secret data store 406 is typically accessed by trusted source controller or API 404 in response to a user entering the proper authentication or identification data into user data input element 402. Trusted source controller or API 404 may perform a verification or validation operation on the data entered by the user (such as to verify the authenticity of a PIN code or data string), or may pass the entered data to other elements depicted in the figure without performing a verification or validation process.

Trusted source controller or API 404 acts to provide the data input by the user (or other data generated in response to that input data) and the secret data stored in secret data store 406 to payment application 408. Payment application 408 receives the provided data and performs one or more verification or validation operations on the received data. For example, User Data and Secret Data Verification Module 410 may receive as inputs the user input data and the secret data from trusted source controller or API 404. Verification Module 410 may then perform data processing, tests, data comparisons, or any other suitable form of data verification or validation operation to determine if both the data input by the user and the secret data are valid. Such data verification or validation operations may include accessing data stored in secure data store 412 to obtain data to which the data input by the user and the secret data are compared, or to obtain data which is otherwise used as part of the verification or validation process. If both the data input by the user and the secret data are verified as valid, then access to the payment application functions 414 is granted to the user. Such access may include use of various functionality or operations of the payment application, as well as access to transaction or account data stored in the mobile payment device.

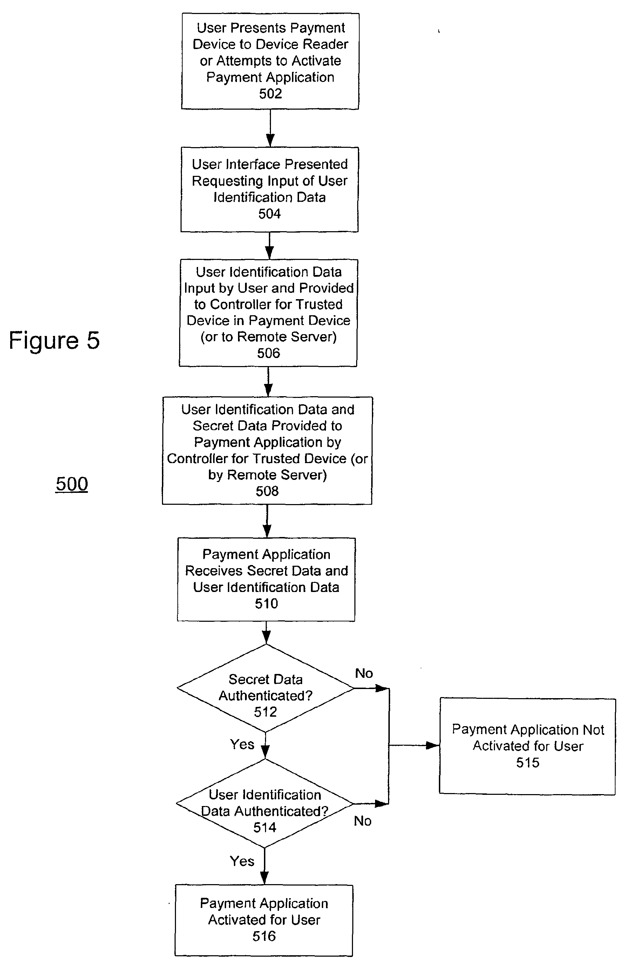

Figure 5 is a flow chart illustrating an embodiment 500 of the inventive method or process for preventing unauthorized use of a payment application contained in a mobile payment device. The process steps or stages illustrated in the figure may be implemented as an independent routine or process, or as part of a larger routine or process. Note that each process step or stage depicted may be implemented as an apparatus that includes a processor executing a set of instructions, a method, or a system, among other embodiments.

As shown in the figure, in an exemplary case, at stage 502 a user presents their payment device to a device reader or point of sale terminal (POS), or otherwise attempts to activate a payment application installed on the payment device. For example, the user may "swipe", "wave", or otherwise present their payment device to the device reader in an attempt to initiate a payment transaction using a near field or short range communications capability of the device. This may be accomplished by causing communication between the device reader or POS terminal and the payment device to trigger activation of the payment application. Such a trigger or activation may occur as the result of the device reader or POS terminal transferring data or a command to the payment device (such as by performing the equivalent of a key or softkey activation), either automatically or in response to a consumer selecting a payment application icon on a device reader or POS terminal screen, for example. The user may also attempt to launch or activate the payment application by entering a keystroke or other form of input data.

In response to the user's attempt to utilize the payment application, the user is presented with a user interface. The user interface may include any suitable combination of elements to enable a user to interact with and utilize the functionality of the payment application. In the exemplary use case, the user interface will request the user to input user identification data or another form of personal data (stage 504) into an appropriate data input device (e.g., element 402 of Figure 4). The user identification data may take any suitable form, with the form depending to some extent upon the data input device being used to provide the requested data. Examples of possible types of user identification data and the corresponding data input devices include, but are not limited to, a keypad for input of an alphanumeric data string (such as a PIN or user passcode), a fingerprint reader for input of a user fingerprint, a microphone for input of a user voiceprint, a touchscreen for input of a sequence of icons or graphical images, etc. Note that in some embodiments of the present invention, the data input device or a controller for the data input device functions as a "trusted device".

At stage 506 the user identification data is input and provided to a controller for the trusted device (or another element that performs the same or equivalent functions). As noted, in some embodiments, the trusted device is the recipient of the data input by the user, or is an element that receives the data from the user interface element to which the data was input. In such cases, the trusted device controller is an application, API, or other suitable element that is responsible for providing an interface and/or enabling data transfer between the trusted device and other elements of the payment device (e.g., element 404 of Figure 4). In some embodiments, the trusted device is associated with secret data that is used as part of the user verification/validation process that is required to enable access to the payment application. The secret data provides a form of authentication for the trusted device and may be stored in a secure data storage element (e.g., element 406 of Figure 4). In response to entry of the user identification data, the trusted device controller provides the user identification data (or data generated in response to entry of that data, such as a hash code, etc.) and the secret data to the payment application (stage 508; e.g., element 408 of Figure 4). The payment application receives the data provided by the trusted device controller (stage 510) and performs one or more data verification/validation operations on the received data (e.g., such operations may be performed by user data and secret data verification module 410 of Figure 4).

The payment application performs one or more data verification/validation operations on the received data to determine if the user will be provided access to the payment application functions and/or transaction data. The data verification/validation operations may include any suitable form of test, comparison, or other data processing, and may include comparison with data stored in a secure data store, such as element 412 of Figure 4. In some embodiments, the payment application will first attempt to authenticate the trusted device authentication data, that is, the secret data (stage 512). This may be done by comparing the secret data received from the trusted device controller to a copy of the secret data stored in a secure data store that is accessible by the payment application (e.g., element 412 of Figure 4). If the received secret data is verified as valid, then the payment application may next attempt to verify the user entered identification data (stage 514; this may also be performed by comparing the received user identification data to a previously stored copy of the data). If the received data is verified as valid (that is, both the secret data and user identification data are valid), then the user is provided access to the functionality of the payment application (stage 516, the payment application is "activated" for the user; e.g., element 414 of Figure 4). The user may also or instead be provided with access to transaction records or data. If either the secret data or user identification data is found to be invalid or otherwise not capable of being authenticated, then the user is denied access to the payment application and/or transaction data (stage 515).

The data verification/validation operations may be performed on the received data in either order; that is, the user identification data may be verified before the "secret data" is verified, or as shown in Figure 5, the "secret data" may be verified before the user identification data is verified. Further, the user identification data may also or instead be verified at stage 504 or another suitable stage, that is before the trusted device controller provides the secret data to the payment application.

Although an embodiment of the invention has been described in which an element of the payment device contains, or is responsible for controlling the presentation of the "secret data" to the payment application, other methods are also possible. For example, entry of a user passcode or other user data into a mobile payment device (such as a mobile phone) may result in the device communicating with a remote server or other data storage location using a suitable communications network. The remote server or data storage location may store the secret data or other data needed to permit activation of the payment application. For example, a user attempt to activate a payment application installed on the payment device may result in the user being requested to enter user verification data, the entry of which may cause the payment application or the device to communicate with a remote server (such as a mobile gateway) over a wireless network. In response to receiving the user entered data, the remote server may verify that the entered data is correct and in response, provide the secret data over the wireless network to the mobile payment device. Once received by the device, the payment application may perform an authentication process on the two types of data (that entered by the user and the secret data received from the remote server). If both types of data are verified as being valid or authentic, then the user would be provided access to the functions of the payment application. Note that in some examples, the remote server may provide both the secret data and the user entered data back to the payment device as part of a single data package or message, with the payment application then using that single data package or message to perform both parts of the data verification operation needed to enable access to the payment application.

Note that the data entered by the user into the payment device (such as a mobile phone keypad) may be verified within the device before a request is sent to the remote server to provide the secret data, or such a request may be triggered by entry of the user data (with verification occurring in the remote server or only later by the payment application itself). Further, although use of a mobile gateway has been described, another form of remote server may store the secret data. For example, a server operated by the Issuer may store the secret data. Also, although use of the wireless or cellular network has been described as the channel for transferring the secret data to the mobile device, other suitable channels may be used. Such channels include communication using the device reader or point of sale terminal, for example (in which case a near field communication or other short range communications method might be used).

It should be understood that the present invention as described above can be implemented in the form of control logic using computer software in a modular or integrated manner. Based on the disclosure and teachings provided herein, a person of ordinary skill in the art will know and appreciate other ways and/or methods to implement the present invention using hardware and a combination of hardware and software

Any of the software components or functions described in this application, may be implemented as software code to be executed by a processor using any suitable computer language such as, for example, Java, C++ or Perl using, for example, conventional or object-oriented techniques. The software code may be stored as a series of instructions, or commands on a computer readable medium, such as a random access memory (RAM), a read only memory (ROM), a magnetic medium such as a hard-drive or a floppy disk, or an optical medium such as a CD-ROM. Any such computer readable medium may reside on or within a single computational apparatus, and may be present on or within different computational apparatuses within a system or network.

While certain exemplary embodiments have been described in detail and shown in the accompanying drawings, it is to be understood that such embodiments are merely illustrative of and not intended to be restrictive of the broad invention, and that this invention is not to be limited to the specific arrangements and constructions shown and described, since various other modifications may occur to those with ordinary skill in the art.

As used herein, the use of "a", "an" or "the" is intended to mean "at least one", unless specifically indicated to the contrary.

## Claims

1. A mobile payment device (102) in the form of a mobile phone, personal digital assistant, or a laptop computer and operable to receive data from a wireless network interface, comprising:
a processor;
a payment application (109,408) installed in the mobile payment device;
a memory (107); and
a set of instructions stored in the memory (107), which when executed by the processor implements a method to:
request a user to input user identification data; and receive the user identification data from a data input device (402) that is part of the mobile payment device (102);
the mobile payment device **characterised by** comprising a trusted source controller (404) configured to control release of secret data in response to receiving the user identification data from the data input device (402), by:
verifying the authenticity of the user identification data;
accessing a secret data store (406) that is separate to the payment application and coupled to the data input device (402) via the trusted source controller (404) to obtain the secret data in response to the user identification data being entered into the data input device (402), wherein the secret data is: provided by and associated with the data input device (402), not known to the user, different from the user identification data and used to authenticate the data input device (402); and
providing the user identification data and the secret data to the payment application (109, 408) in the mobile payment device (102);
wherein the payment application (109, 408) is configured to verify: the validity of the secret data by comparing the secret data received from the trusted source controller (404) to a copy of the secret data stored in a secure data store (412) within the payment application; and the validity of the user identification data by comparing the received user identification data to a previously stored copy of the data; and
if both the secret data and the user identification data are valid, then providing the user with access to the payment application (109, 408); and if either the secret data provided by and associated with the data input device (402) or the user identification data are not valid, then preventing the user from accessing the payment application (109, 408).

2. The mobile payment device of claim 1, wherein the device (102) includes a contactless element (106).

3. The mobile payment device (102) of claim 2, wherein the contactless element (106) includes a wireless communications capability.

4. The mobile payment device (102) of claim 1, wherein the secret data is generated for each attempt to utilize the payment application (109,408), after a predetermined number of attempts to utilize the payment application (109,408), or after a predetermined amount of time has elapsed since the previous generation of the secret data.

5. A method of preventing unauthorized access to a payment application (109, 408) installed on a mobile payment device (102) in the form of a mobile phone, personal digital assistant, or a laptop computer and operable to receive data from a wireless network interface, comprising:
requesting a user to input user identification data;
receiving the user identification data from a data input device (402) that is part of the mobile payment device (102), the method **characterised in that**:
a trusted source controller (404) is configured to control release of secret data in response to receiving the user identification data from the data input device (402), by:
verifying the authenticity of the user identification data;
accessing a secret data store (406) that is separate to the payment application and coupled to the data input device (402) via the trusted source controller (404) to obtain the secret data in response to the user identification data being entered into the data input device (402), wherein the secret data is provided by and associated with the data input device (402), not known to the user, different from the user identification data and used to authenticate the data input device (402); and
providing the user identification data and the secret data to the payment application (109, 408) in the mobile payment device (102);
wherein the payment application (109, 408) is configured to verify: the validity of the secret data by comparing the secret data received from the trusted source controller (404) to a copy of the secret data stored in a secure data store (412) within the payment application; and the validity of the user identification data by comparing the received user identification data to a previously stored copy of the data; and
if both the secret data and the user identification data are valid, then providing the user with access to the payment application (109, 408); and if either the secret data associated with the data input device (402) or the user identification data are not valid, then preventing the user from accessing the payment application (109,408).

6. The method of claim 5, wherein the secret data is a data string.

7. The method of claim 6, wherein the data string is an alphanumeric data string.

8. The method of claim 5, further comprising generating the secret data for each attempt to utilize the payment application (109, 408), after a predetermined number of attempts to utilize the payment application (109, 408), or after a predetermined amount of time has elapsed since the previous generation of the secret data.

9. The method of claim 5, further comprising determining that a user is attempting to utilize the payment application by detecting a device reader or point of sale terminal, or receiving a data input from a data input element (402) of the mobile payment device (102).

10. A data storage element in which are stored a set of instructions executable by a processor contained in a mobile payment device (102), wherein, when executed by the processor, the instructions implement a method according to any of claims 5 to 9.

11. The mobile payment device of claim 1, wherein the user identification data is one of a passcode, a personal identification number, an alphanumeric data string, a fingerprint, or a voice input.

## Patentansprüche

1. Mobile Zahlungsvorrichtung (102) in Form eines Mobiltelefons, persönlichen digitalen Assistenten oder Laptop-Computers und betreibbar zur Entgegennahme von Daten von einer drahtlosen Netzwerkschnittstelle, umfassend:
einen Prozessor;
eine in der mobilen Zahlungsvorrichtung installierte Zahlungsanwendung (109, 408);
einen Speicher (107); und
einen im Speicher (107) gespeicherten Satz von Anweisungen, der beim Ausführen durch den Prozessor ein Verfahren implementiert zum:
Auffordern eines Benutzers zur Eingabe von Benutzeridentifikationsdaten; und Entgegennehmen der Benutzeridentifikationsdaten von einer Dateneingabevorrichtung (402), die Bestandteil der mobilen Zahlungsvorrichtung (102) ist;
wobei die mobile Zahlungsvorrichtung **dadurch gekennzeichnet ist, dass** sie einen Trusted Source Controller (404) umfasst, der dafür konfiguriert ist, die Freigabe von Geheimdaten als Reaktion auf die Entgegennahme der Benutzeridentifikationsdaten von der Dateneingabevorrichtung (402) durch Folgendes zu kontrollieren:
Verifizieren der Authentizität der Benutzeridentifikationsdaten;
Zugreifen auf einen Geheimdatenspeicher (406), der getrennt von der Zahlungsanwendung und mit der Dateneingabevorrichtung (402) über den Trusted Source Controller (404) gekoppelt ist, um die Geheimdaten als Reaktion auf die Eingabe der Benutzeridentifikationsdaten in die Dateneingabevorrichtung (402) zu erhalten, worin die Geheimdaten: von der Dateneingabevorrichtung (402) bereitgestellt werden und mit ihr assoziiert sind, dem Benutzer nicht bekannt sind, sich von den Benutzeridentifikationsdaten unterscheiden und zum Authentifizieren der Dateneingabevorrichtung (402) benutzt werden; und
Übermitteln der Benutzeridentifikationsdaten und der Geheimdaten an die Zahlungsanwendung (109, 408) in der mobilen Zahlungsvorrichtung (102);
worin die Zahlungsanwendung (109, 408) dafür konfiguriert ist, Folgendes zu verifizieren: die Gültigkeit der Geheimdaten durch Vergleich der vom Trusted Source Controller (404) entgegengenommenen Geheimdaten mit einer Kopie der Geheimdaten, die in einem sicheren Datenspeicher (412) innerhalb der Zahlungsanwendung gespeichert ist; und die Gültigkeit der Benutzeridentifikationsdaten durch Vergleich der entgegengenommenen Benutzeridentifikationsdaten mit einer zuvor gespeicherten Kopie der Daten; und wenn sowohl die Geheimdaten als auch die Benutzeridentifikationsdaten gültig sind, anschließendes Ermöglichen des Benutzerzugriffs auf die Zahlungsanwendung (109, 408); und wenn entweder die von der Dateneingabevorrichtung (402) bereitgestellten und mit ihr assoziierten Geheimdaten oder die Benutzeridentifikationsdaten nicht gültig sind, anschließendes Hindern des Benutzers am Zugreifen auf die Zahlungsanwendung (109, 408).

2. Mobile Zahlungsvorrichtung nach Anspruch 1, worin die Vorrichtung (102) ein berührungsfreies Element (106) beinhaltet.

3. Mobile Zahlungsvorrichtung (102) nach Anspruch 2, worin das berührungsfreie Element (106) eine drahtlose Kommunikationsfunktionalität beinhaltet.

4. Mobile Zahlungsvorrichtung (102) nach Anspruch 1, worin die Geheimdaten bei jeder versuchten Nutzung der Zahlungsanwendung (109, 408), nach einer vorbestimmten Anzahl von versuchten Nutzungen der Zahlungsanwendung (109, 408) oder nachdem ein vorbestimmter Zeitbetrag seit der vorherigen Erzeugung der Geheimdaten verstrichen ist, erzeugt werden.

5. Verfahren zur Verhinderung unerlaubten Zugriffs auf eine Zahlungsanwendung (109, 408), die auf einer mobilen Zahlungsvorrichtung (102) in Form eines Mobiltelefons, persönlichen digitalen Assistenten oder Laptop-Computers installiert und betreibbar ist, um Daten von einer drahtlosen Netzwerkschnittstelle entgegenzunehmen, umfassend:
Auffordern eines Benutzers zur Eingabe von Benutzeridentifikationsdaten;
Entgegennehmen der Benutzeridentifikationsdaten von einer Dateneingabevorrichtung (402), die Bestandteil der mobilen Zahlungsvorrichtung (102) ist, wobei das Verfahren **dadurch gekennzeichnet ist, dass**:
ein Trusted Source Controller (404) dafür konfiguriert ist, die Freigabe von Geheimdaten als Reaktion auf die Entgegennahme der Benutzeridentifikationsdaten von der Dateneingabevorrichtung (402) durch Folgendes zu kontrollieren:
Verifizieren der Authentizität der Benutzeridentifikationsdaten;
Zugreifen auf einen Geheimdatenspeicher (406), der getrennt von der Zahlungsanwendung und mit der Dateneingabevorrichtung (402) über den Trusted Source Controller (404) gekoppelt ist, um die Geheimdaten als Reaktion auf die Eingabe der Benutzeridentifikationsdaten in die Dateneingabevorrichtung (402) zu erhalten, worin die Geheimdaten von der Dateneingabevorrichtung (402) bereitgestellt werden und mit ihr assoziiert sind, dem Benutzer nicht bekannt sind, sich von den Benutzeridentifikationsdaten unterscheiden und zum Authentifizieren der Dateneingabevorrichtung (402) benutzt werden; und
Übermitteln der Benutzeridentifikationsdaten und der Geheimdaten an die Zahlungsanwendung (109, 408) in der mobilen Zahlungsvorrichtung (102);
worin die Zahlungsanwendung (109, 408) dafür konfiguriert ist, Folgendes zu verifizieren: die Gültigkeit der Geheimdaten durch Vergleich der vom Trusted Source Controller (404) entgegengenommenen Geheimdaten mit einer Kopie der Geheimdaten, die in einem sicheren Datenspeicher (412) innerhalb der Zahlungsanwendung gespeichert ist; und die Gültigkeit der Benutzeridentifikationsdaten durch Vergleich der entgegengenommenen Benutzeridentifikationsdaten mit einer zuvor gespeicherten Kopie der Daten; und
wenn sowohl die Geheimdaten als auch die Benutzeridentifikationsdaten gültig sind, anschließendes Ermöglichen des Benutzerzugriffs auf die Zahlungsanwendung (109, 408); und wenn entweder die mit der Dateneingabevorrichtung (402) assoziierten Geheimdaten oder die Benutzeridentifikationsdaten nicht gültig sind, anschließendes Hindern des Benutzers am Zugreifen auf die Zahlungsanwendung (109, 408).

6. Verfahren nach Anspruch 5, worin die Geheimdaten ein Datenstring sind.

7. Verfahren nach Anspruch 6, worin der Datenstring ein alphanumerischer Datenstring ist.

8. Verfahren nach Anspruch 5, ferner umfassend das Erzeugen der Geheimdaten bei jeder versuchten Nutzung der Zahlungsanwendung (109, 408), nach einer vorbestimmten Anzahl von versuchten Nutzungen der Zahlungsanwendung (109, 408) oder nachdem ein vorbestimmter Zeitbetrag seit der vorherigen Erzeugung der Geheimdaten verstrichen ist.

9. Verfahren nach Anspruch 5, ferner umfassend das Bestimmen dessen, dass ein Benutzer versucht, die Zahlungsanwendung zu nutzen, durch Erkennen eines Gerätelesers oder POS-Terminals oder Entgegennehmen einer Dateneingabe von einem Dateneingabeelement (402) der mobilen Zahlungsvorrichtung (102).

10. Datenspeicherelement, in dem ein Satz Anweisungen gespeichert ist, der von einem in einer mobilen Zahlungsvorrichtung (102) enthaltenen Prozessor ausführbar ist, worin, beim Ausführen durch den Prozessor, die Anweisungen ein Verfahren nach irgendeinem der Ansprüche 5 bis 9 implementieren.

11. Mobile Zahlungsvorrichtung nach Anspruch 1, worin die Benutzeridentifikationsdaten entweder ein Passcode, eine persönliche Identifizierungsnummer, ein alphanumerischer Datenstring, ein Fingerabdruck oder eine Spracheingabe sind.

## Revendications

1. Dispositif mobile de paiement (102) sous la forme d'un téléphone mobile, d'un assistant numérique ou d'un ordinateur portable, et servant à recevoir des données provenant d'une interface réseau sans fil, comprenant :
un processeur ;
une application de paiement (109, 408) installée sur le dispositif mobile de paiement ;
une mémoire (107) ; et
un jeu d'instructions stocké sur la mémoire (107), qui lorsqu'il est exécuté par le processeur, met en oeuvre un procédé consistant à :
demander à un utilisateur de saisir des données d'identification d'utilisateur ; et recevoir les données d'identification d'utilisateur provenant d'un dispositif de saisie de données (402) faisant partie du dispositif mobile de paiement (102) ;
le dispositif mobile de paiement étant **caractérisé en ce qu'**il comprend un contrôleur source de confiance (404) conçu pour contrôler la libération de données secrètes en réponse à la réception des données d'identification d'utilisateur provenant du dispositif de saisie de données (402) en effectuant les étapes consistant à :
vérifier l'authenticité des données d'identification d'utilisateur ;
accéder à un magasin de données secrètes (406) séparé de l'application de paiement et couplé au dispositif de saisie de données (402) par l'intermédiaire du contrôleur source de confiance (404) afin d'obtenir les données secrètes en réponse aux données d'identification d'utilisateur saisies dans le dispositif de saisie de données (402), les données secrètes étant : fournies par le dispositif de saisie de données (402) et associées audit dispositif, inconnues de l'utilisateur, différentes des données d'identification d'utilisateur et utilisées pour authentifier le dispositif de saisie de données (402) ; et
fournir les données d'identification d'utilisateur et les données secrètes à l'application de paiement (109, 408) installée sur le dispositif mobile de paiement (102) ;
l'application de paiement (109, 408) étant conçue pour vérifier : la validité des données secrètes en comparant les données secrètes reçues du contrôleur source de confiance (404) à une copie des données secrètes stockées dans un magasin de données sécurisé (412) dans l'application de paiement ; et la validité des données d'identification d'utilisateur en comparant les données d'identification d'utilisateur reçues à une copie préalablement stockée des données ; et
si les données secrètes et les données d'identification d'utilisateur sont valides, permettre à l'utilisateur d'accéder à l'application de paiement (109, 408) ; et si les données secrètes fournies par le dispositif de saisie de données (402) et associées audit dispositif ou si les données d'identification d'utilisateur ne sont pas valides, empêcher l'utilisateur d'accéder à l'application de paiement (109, 408).

2. Dispositif mobile de paiement selon la revendication 1, le dispositif (102) comprenant un élément sans contact (106).

3. Dispositif mobile de paiement (102) selon la revendication 2, dans lequel l'élément sans contact (106) comprend une fonction de communication sans fil.

4. Dispositif mobile de paiement (102) selon la revendication 1, dans lequel les données secrètes sont générées pour chaque tentative d'utilisation de l'application de paiement (109, 408), après un nombre prédéterminé de tentatives d'utilisation de l'application de paiement (109, 408), ou après une durée prédéterminée qui s'est écoulée depuis la génération précédente des données secrètes.

5. Procédé permettant d'empêcher un accès non autorisé à une application de paiement (109, 408) installée sur un dispositif mobile de paiement (102) sous la forme d'un téléphone mobile, d'un assistant numérique ou d'un ordinateur portable, et servant à recevoir des données provenant d'une interface réseau sans fil, consistant à :
demander à un utilisateur de saisir des données d'identification d'utilisateur ;
recevoir les données d'identification d'utilisateur provenant d'un dispositif de saisie de données (402) faisant partie du dispositif mobile de paiement (102), le procédé étant **caractérisé par** :
un contrôleur source de confiance (404) conçu pour contrôler la libération de données secrètes en réponse à la réception des données d'identification d'utilisateur provenant du dispositif de saisie de données (402) en effectuant les étapes consistant à :
vérifier l'authenticité des données d'identification d'utilisateur ;
accéder à un magasin de données secrètes (406) séparé de l'application de paiement et couplé au dispositif de saisie de données (402) par l'intermédiaire du contrôleur source de confiance (404) afin d'obtenir les données secrètes en réponse aux données d'identification d'utilisateur saisies dans le dispositif de saisie de données (402), les données secrètes étant : fournies par le dispositif de saisie de données (402) et associées audit dispositif, inconnues de l'utilisateur, différentes des données d'identification d'utilisateur et utilisées pour authentifier le dispositif de saisie de données (402) ; et
fournir les données d'identification d'utilisateur et les données secrètes à l'application de paiement (109, 408) installée sur le dispositif mobile de paiement (102) ;
l'application de paiement (109, 408) étant conçue pour vérifier : la validité des données secrètes en comparant les données secrètes reçues du contrôleur source de confiance (404) à une copie des données secrètes stockées dans un magasin de données sécurisé (412) dans l'application de paiement ; et la validité des données d'identification d'utilisateur en comparant les données d'identification d'utilisateur reçues à une copie préalablement stockée des données ; et
si les données secrètes et les données d'identification d'utilisateur sont valides, permettre à l'utilisateur d'accéder à l'application de paiement (109, 408) ; et si les données secrètes associées au dispositif de saisie de données (402) ou les données d'identification d'utilisateur ne sont pas valides, empêcher l'utilisateur d'accéder à l'application de paiement (109, 408).

6. Procédé selon la revendication 5, dans lequel les données secrètes sont une chaîne de données.

7. Procédé selon la revendication 6, dans lequel la chaîne de données est une chaîne de données alphanumériques.

8. Procédé selon la revendication 5, consistant en outre à générer les données secrètes pour chaque tentative d'utilisation de l'application de paiement (109, 408), après un nombre prédéterminé de tentatives d'utilisation de l'application de paiement (109, 408), ou après une durée prédéterminée qui s'est écoulée depuis la génération précédente des données secrètes.

9. Procédé selon la revendication 5, consistant en outre à déterminer qu'un utilisateur tente d'utiliser l'application de paiement en détectant un lecteur de dispositif ou un terminal de point de vente, ou en recevant une saisie de données provenant d'un élément de saisie de données (402) du dispositif mobile de paiement (102).

10. Élément de stockage de données sur lequel est stocké un jeu d'instructions exécutable par un processeur contenu dans un dispositif mobile de paiement (102), les instructions, lorsqu'elles sont exécutées par le processeur, mettant en oeuvre un procédé selon l'une quelconque des revendications 5 à 9.

11. Dispositif mobile de paiement selon la revendication 1, dans lequel les données d'identification d'utilisateur sont choisies parmi un code de passe, un numéro d'identification personnelle, une chaîne de données alphanumériques, une empreinte digitale ou une saisie vocale.
